# EUROPÄISCHE PATENTSCHRIFT

(11) **EP 0 385 223 B1**
(45) Veröffentlichungstag und Bekanntmachung des Hinweises auf die Patenterteilung: **17.11.1994**
(21) Anmeldenummer: 90103174.0
(22) Anmeldetag: 20.02.1990
(51) Int. Cl.: C08G 61/12

(54) **Verfahren zur Herstellung von Polyaryletherketonen durch elektrophile Polykondensation**
Process for preparing polyaryleneetherketones by electrophilic polycondensation
Procédé pour la préparation de polyarylèneéthercétones par polycondensation électrophile

(30) Priorität: 28.02.1989 DE 3906178
(43) Veröffentlichungstag der Anmeldung: 05.09.1990
(73) Patentinhaber: BASF Aktiengesellschaft, 67063 Ludwigshafen (DE)
(72) Erfinder: Koch, Juergen, Dr., D-6708 Neuhofen (DE); Heinz, Gerhard, Dr., D-6719 Weisenheim (DE)

(56) Entgegenhaltungen:
- EP-A- 0 087 532
- EP-A- 0 298 771
- WO-A-84/03891
- J. March, Advanced Organic Chemistry, John Wiley & Sons, 3rd Ed. (1985), p. 388.

## Beschreibung

Die vorliegende Erfindung betrifft ein Verfahren zur Herstellung von Polyaryletherketonen durch elektrophile Polykondensation unter Verwendung von Carbonsäurehalogeniden als Monomerbestandteil in Gegenwart einer Lewis-Säure und gegebenenfalls einer Lewis-Base in einem inerten Lösungsmittel.

Polyaryletherketone gehören zur Klasse der hochtemperaturbeständigen Thermoplaste und zeichnen sich neben ihrer guten Temperaturbeständigkeit vor allem durch gute mechanische Eigenschaften und eine ausgezeichnete Lösungsmittelbeständigkeit aus.

Prinzipiell lassen sich Polyaryletherketone auf nukleophilem oder auf elektrophilem Weg herstellen, und entsprechende Verfahren sind in der Literatur beschrieben. Bei der elektrophilen Verfahrensweise werden allgemein aromatische Dicarbonsäurehalogenide oder Phosgen mit geeigneten aromatischen Verbindungen, welche zwei durch elektrophile Substitution austauschbare Wasserstoffatome enthalten, umgesetzt oder ein aromatisches Carbonsäurehalogenid, welches sowohl eine Säurehalogenidgruppe als auch ein substituierbares Wasserstoffatom enthält, mit sich selbst polykondensiert. Als Katalysatoren werden in der Regel Lewis-Säuren eingesetzt. In den US-A-3441538, US-A-3442857, US-A-3953400, DE-A-3241444, DE-A-3416445 und DE-A-3416446 werden elektrophile Polykondensationsreaktionen beschrieben, in denen HF als Lösungsmittel und BF₃ als Katalysator verwendet wird.

Gemäß einer Variante können auch halogenierte Kohlenwasserstoffe als Lösungsmittel und andere Lewis-Säuren, z.B. AlCl₃ als Katalysator verwendet werden.

Schließlich ist es nach der Lehre der WO-A-84/03891 und WO-A-84/03892 vorteilhaft, die Reaktion in Gegenwart einer Lewis-Base durchzuführen.

Allen elektrophilen Polykondensationsverfahren gemein ist die Verwendung von aromatischen Carbonsäurehalogeniden, insbesondere Chloriden oder Phosgen als Monomeren. Aromatische Carbonsäurehalogenide sind jedoch nicht lagerstabil, da sie mit Spuren von Feuchtigkeit unter Hydrolyse zu den entsprechenden Carbonsäuren reagieren; selbst unter Ausschluß von Feuchtigkeit sind Carbonsäurechloride nicht unbegrenzt lagerstabil. Die bei der Hydrolyse entstehenden Produkte führen bei der Polykondensation zu einem unvollständigen Umsatz und damit zu Produkten mit niedrigem Molekulargewicht.

Hinzu kommt, daß die nicht abreagierten Carbonsäuregruppen wegen ihrer mangelnden thermischen Stabilität zu Problemen bei der Verarbeitung führen, da die Schmelzestabilität des Polymeren verschlechtert wird und durch Decarboxylierung abgespaltenes CO₂ zum Aufschäumen der Polymerschmelze führt.

Auch die Regelung des Molekulargewichts ist bei der Verwendung verunreinigter Carbonsäurehalogenide nur unbefriedigend möglich, da das Molekulargewicht dann im wesentlichen durch die Verunreinigungen bestimmt wird.

Um alle diese Probleme zu vermeiden, war es bislang erforderlich, die eingesetzten Carbonsäurehalogenide unmittelbar vor der Verwendung durch aufwendige Maßnahmen (z.B. Umkristallisation oder Destillation) zu reinigen. Es ist leicht einzusehen, daß dieser Aufwand für ein großtechnisch anwendbares Verfahren nicht akzeptabel ist.

Aufgabe der vorliegenden Erfindung war es daher, ein Verfahren zur Herstellung von Polyaryletherketonen durch elektrophile Polykondensation zur Verfügung zu stellen, in dem die vorstehend beschriebenen Probleme nicht auftreten und auch bei Verwendung von nicht unmittelbar vor der Polykondensation gereinigten Monomeren Polymere mit guter Schmelzestabilität und hohem Molekulargewicht erhalten werden. Darüber hinaus sollte die Regelung des Molekulargewichts gut kontrollierbar sein.

Diese Aufgabe wird erfindungsgemäß gelöst durch ein Verfahren zur Herstellung von Polyaryletherketonen durch elektrophile Polykondensation unter Verwendung von Carbonsäurehalogeniden als Monomerbestandteil in Gegenwart einer Lewis-Säure als Katalysator und gegebenenfalls einer Lewis-Base in einem inerten Lösungsmittel, wobei der Reaktionsmischung eine Menge von 0,1 bis 10 mol%, bezogen auf die Menge an eingesetzten Carbonsäurehalogeniden, an Halogenverbindungen des Phosphors oder Schwefels gemäß Anspruch 1 zugesetzt wird. Bevorzugte Ausführungsformen des erfindungsgemäßen Verfahrens sind den Unteransprüchen und der nachfolgenden detaillierten Beschreibung zu entnehmen.

Das beanspruchte Verfahren eignet sich zur Herstellung von Polyaryletherketonen mit beliebigen wiederkehrenden Einheiten, d.h. prinzipiell allen Polymeren, in deren Hauptkette aromatische Struktureinheiten im wesentlichen durch -CO- oder -O-Brücken miteinander verknüpft sind. Neben diesen Verknüpfungen können in kleineren Anteilen auch andere verknüpfende Einheiten vorhanden sein.

Bevorzugt weisen die Polyaryletherketone wiederkehrende Einheiten der allgemeinen Formeln I und/oder II bzw. deren kernsubstituierte C₁-C₆-Alkyl-, C₁-C₆-Alkoxy-Aryl-, Chlor- oder Fluorderivate auf.

Einheiten der allgemeinen Formel I haben die Struktur 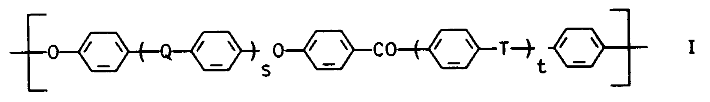
wobei s und t jeweils den Wert 0,1, 2 oder 3 haben und Q und T jeweils -O-oder -CO- sein können.

Einheiten der allgemeinen Formel II haben die Struktur 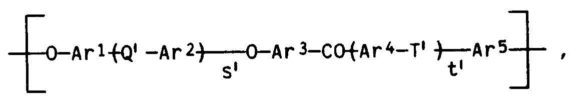
wobei Ar¹, Ar², Ar³, Ar⁴ und Ar⁵ unabhängig voneinander jeweils eine m-Phenylen, p-Phenylen-, Biphenylen- oder Naphthylengruppe oder ein C₁-C₆-Alkyl, C₁-C₆-Alkoxy-, Aryl-, Chlor- oder Fluorderivat derselben darstellen, Q' und T' jeweils -O- oder -CO- sein können und s' und t' jeweils den Wert 0,1, 2 oder 3 haben, mit der Maßgabe, daß mindestens einer der Gruppen Ar¹, Ar², Ar³, Ar⁴ oder Ar⁵ eine m-Phenylen-, Biphenylen- oder Naphthylengruppe oder ein C₁-C₆-Alkyl-, C₁-C₆-Alkoxy-, Aryl-, Chlor- oder Fluorderivat einer solchen Gruppe ist.

Stellvertretend für wiederkehrende Einheiten, die unter die allgemeine Formel I fallen, seien die nachstehenden genannt: 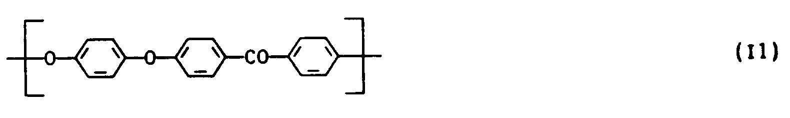 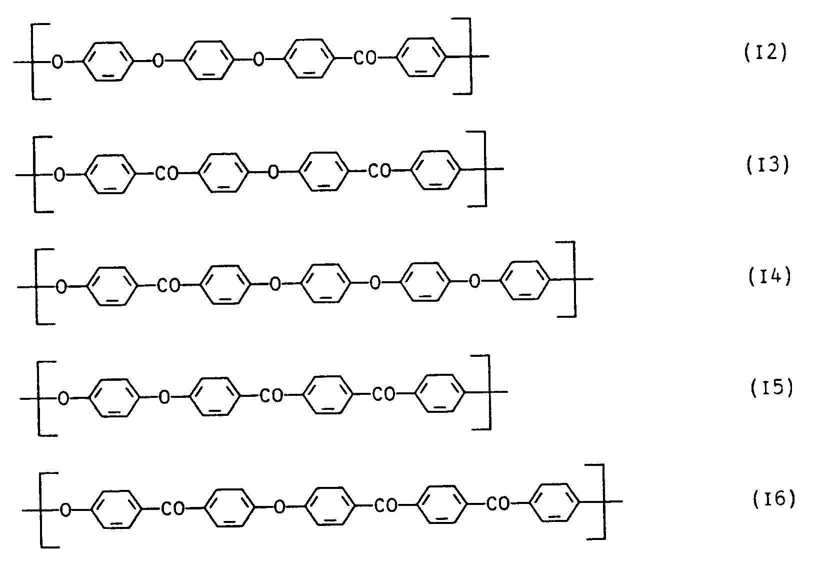
Im Falle der Polyaryletherketone mit wiederkehrenden Einheiten der allgemeinen Formel II werden solche, in denen beide Substituenten Q' und T' jeweils eine -CO-Gruppe darstellen, sowie solche, in denen die wiederkehrenden Einheiten der allgemeinen Formel II folgenden Aufbau haben 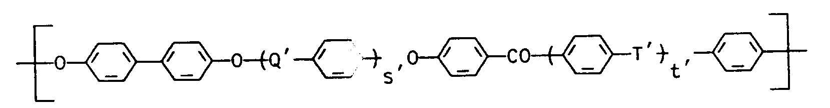
wobei die aromatischen Ringe durch C₁-C₆-Alkyl, C₁-C₆-Alkoxy-, Aryl-, Chlor- oder Fluorgruppen substituiert sein können und Q', T', s' und t', die vorstehend angegebene Bedeutung haben, bevorzugt.

Als Beispiele für wiederkehrende Einheiten der allgemeinen Formel II seien stellvertretend die nachstehenden genannt: 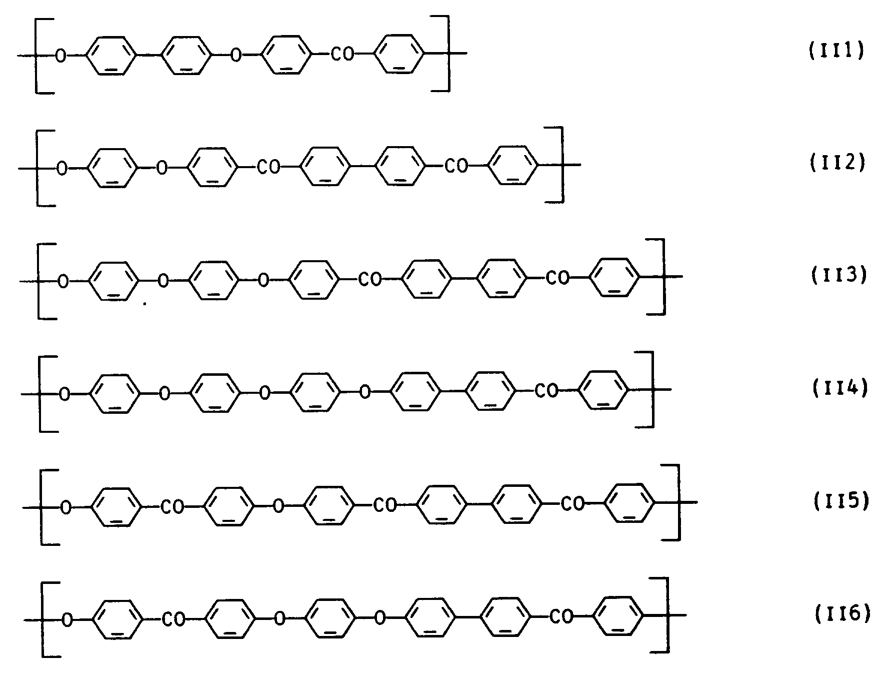
Die in den Formeln (II1)-(II6) enthaltenen Diphenyleneinheiten können durch Naphthyleneinheiten ersetzt werden.

Die Herstellung von Polyaryletherketonen des vorstehend beschriebenen Aufbaus durch elektrophile Polykondensation läßt sich prinzipiell durch drei allgemeine Gleichungen darstellen:
a) 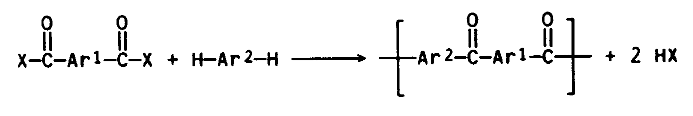
b) 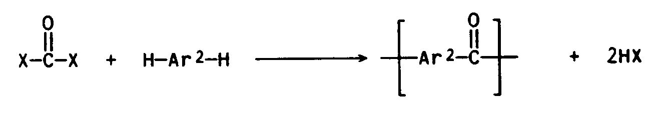
c)

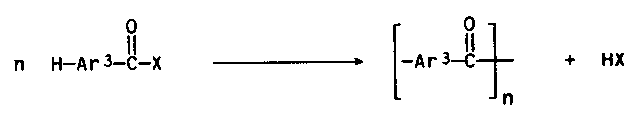

Dabei steht X in diesen allgemeinen Gleichungen für Cl, Br, F oder I, vorzugsweise Cl, und Ar¹, Ar² und Ar³ stellen zweiwertige aromatische Reste dar, die entsprechend den wiederkehrenden Einheiten des gewünschten Polyaryletherketons gewählt werden.

So kann z.B. das Polyaryletherketon mit wiederkehrenden Einheiten der Formel I3 durch Umsetzung von Phosgen mit Diphenylether nach der allgemeinen Gleichung b) und ein Polyaryletherketon mit wiederkehrenden Einheiten der Formel I6 durch Umsetzung von Terephthaloyldichlorid mit 4,4'-Diphenoxybenzophenon erhalten werden.

Die Reaktionsgleichungen lauten in diesen Fällen 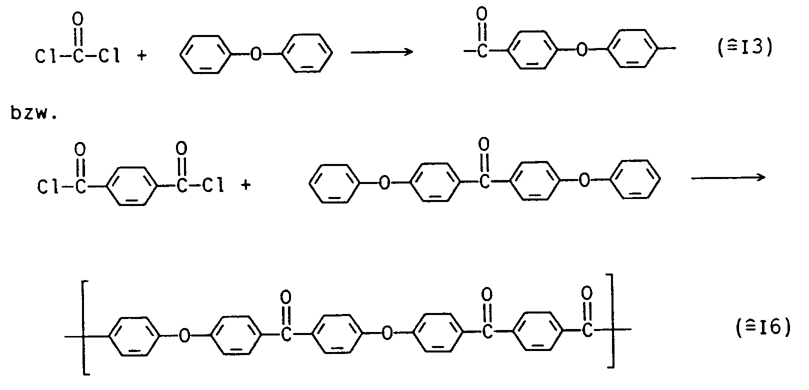
Die Polyaryletherketone mit den anderen vorstehend wiedergegebenen wiederkehrenden Einheiten werden durch entsprechende Wahl der Ausgangsverbindungen erhalten.

Als bevorzugte Carbonsäurehalogenide 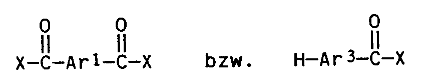
seien Verbindungen genannt, in denen Ar¹ bzw. Ar³ die folgende Bedeutung haben 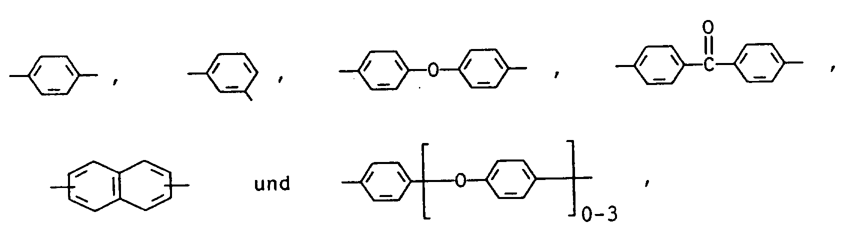
wobei die drei erstgenannten Verbindungen besonders bevorzugt werden. Weitere geeignete Säurehalogenide sind z.B. in der US-A 3956240 beschrieben.

Als bevorzugte Verbindungen HAr²H gemäß den vorstehend angegebenen Reaktionsgleichungen seien hier stellvertretend Diphenylether, 4,4'-Diphenoxybenzophenon, 1,4-Diphenoxybenzol und 4-Phenoxydiphenyl genannt. Weitere geeignete Verbindungen sind z.B. der bereits erwähnten US-A-3956240 und der US-A-4239884 zu entnehmen, auf die hier wegen näherer Einzelheiten verwiesen sei.

Gegebenenfalls können auch monofunktionelle Verbindungen zugesetzt werden, die einen Endgruppenverschluß in den gebildeten Produkten bewirken. Entsprechende Verbindungen sind dem Fachmann bekannt und in der Literatur beschrieben.

Die elektrophile Polykondensation der vorstehend beschriebenen Monomeren wird in Gegenwart einer Lewis-Säure in einem unter den Reaktionsbedingungen inerten Lösungsmittel durchgeführt. Die Lewis-Säure wird dabei in einem molaren Überschuß, bezogen auf die molare Menge an eingesetzten Carbonylgruppen bzw. Säurehalogeniden verwendet, wobei der molare Überschuß ausreichend sein muß, um die Reaktion zu katalysieren. Im allgemeinen reicht ein Überschuß von 2 bis 80, vorzugsweise von 5 bis 30 mol% Lewis-Säure, bezogen auf die eingesetzte Menge an aktiven, d.h. an der Reaktion teilnehmenden Carbonylgruppen, für diesen Zweck aus.

Der notwendige Überschuß hängt natürlich auch von der Art der eingesetzten Monomeren ab; falls in Comonomeren basische Gruppen (z.B. Sulfongruppen) vorhanden sind, kann es erforderlich sein, einen höheren Überschuß an Lewis-Säure einzusetzen.

Mit dem Begriff Lewis-Säure sind hier AlCl₃, AlBr₃, SbCl₅, SbF₅, InCl₃ GaCl₃, BCl₃, BF₃, ZnCl₂, FeCl₃, SnCl₄, TiCl₄ und MoCl₅ gemeint, wovon insbesondere wasserfreies AlCl₃ bevorzugt wird.

Gemäß einer bevorzugten Ausführungsform des Verfahrens wird die Polykondensation in Gegenwart von 0,01 bis 4 mol, vorzugsweise 0,05 bis 2 mol, einer Lewis-Base, bezogen auf die molare Menge an Säurehalogenidgruppen durchgeführt. Diese steuert in gewissem Maße die Reaktion und unterdrückt unter anderem unerwünschte Nebenreaktionen (z.B. die ortho-Substitution aktivierter Aryloxygruppen). Geeignete Lewis-Basen für diese Zwecke werden detailliert in der WO-A-84/03891 beschrieben, auf die hier wegen näherer Einzelheiten verwiesen sei. Nur beispielhaft seien Amide, Amine, Ester, Ether, Ketone, Nitrile, Nitroverbindungen, Phosphine, Phosphinoxide, Sulfide, Sulfone, Sulfonamide und Sulfoxide genannt, wobei darauf geachtet werden sollte, daß die Lewis-Base zum einen nicht acylierend, alkylierend oder arylierend wirkt, zum anderen selbst nicht acyliert wird.

Bevorzugte Lewis-Basen sind N-Methylformamid, N,N-Dimethylformamid, N,N-Dimethylacetamid, 1-Methyl-2-Pyrrolidon, Aceton, Benzophenon und Alkalimetallchloride, um nur einige zu nennen.

Als inerte Lösungsmittel werden vorzugsweise polare Lösungsmittel eingesetzt, deren Dielektrizitätskonstante mindestens 2,5, vorzugsweise 4,0 bis 25 (bei 25°C) beträgt. Beispielhaft seien hier Methylenchlorid, Schwefelkohlenstoff, 1,2-Dichlorethan, 1,1,2,2-Tetrachlorethan und 1,2-Dichlorbenzol sowie deren Mischungen genannt.

Bei Verwendung von BF₃ als Lewis-Säure hat sich HF als Lösungsmittel bewährt.

Die Temperatur, bei der die Reaktion durchgeführt wird, liegt im allgemeinen im Bereich von -50 bis +150°C, vorzugsweise im Bereich von -20 bis +50°C.

Es versteht sich, daß alle Lösungsmittel und Monomere möglichst wasserfrei eingesetzt werden sollten.

Wesentlicher Schritt des erfindungsgemäßen Verfahrens ist, daß man der Reaktionsmischung 0,1 bis 10 mol%, vorzugsweise 0,2 bis 8 mol%, bezogen auf die Menge an eingesetztem Carbonsäurehalogenid, an Halogenverbindungen des Phosphors und des Schwefels, ausgewählt aus der Gruppe PCl₃, POCl₃, PCl₅ und SOCl₂, zusetzt, wovon Phosphoroxytrichlorid bevorzugt wird.

Vorteilhaft wird die Verbindung vor Beginn der Polykondensation insbesondere vor der Zugabe des Säurehalogenids, zur Reaktionsmischung, zugesetzt, sie kann jedoch prinzipiell auch noch während der Kondensation zugegeben werden, solange noch keine unerwünschten Reaktionen aufgetreten sind.

Nach erfolgter Polykondensation arbeitet man die Reaktionsmasse nach an sich bekannter und in der Literatur beschriebenen Verfahren auf. Vorzugsweise wird hierzu eine Lewis-Base zugegeben, die den Lewis-Säure/Polymer-Komplex und auch evtl. noch vorhandene Mengen der zugesetzten Halogenverbindung abbaut. Beispiele für solche Lewis-Basen finden sich in der bereits erwähnt WO-A-84/03891. Bevorzugt werden Wasser und Methanol oder deren Mischungen. Nach dieser Dekomplexierung und gegebenenfalls Zerkleinerung des Produkts kann dieses zur Reinigung noch mit einem geeigneten Lösungsmittel extrahiert werden.

Das erfindungsgemäße Verfahren erlaubt auf einfachem Weg die Herstellung hochmolekularer und schmelzestabiler Polyaryletherketone, wobei das Molekulargewicht einfach und genau kontrolliert werden kann. Die Reproduzierbarkeit des Verfahrens ist nicht davon abhängig, daß stets frisch gereinigte Monomere eingesetzt werden.

### Beispiel 1 (Vergleich)

### (nichtstöchiometrisches Verhältnis der Monomeren, Endgruppenverschluß)

In einem 1 L-Dreihalskolben mit Rührer und Stickstoffeinleitung wurden 200 ml getrocknetes Methylenchlorid vorgelegt. Bei -20°C wurden 147,335 g (1,105 Mol) wasserfreies Aluminiumtrichlorid suspendiert. Dazu wurden langsam 28,239 g (0,300 Mol) Dimethylsulfon gegeben. Bei -15°C wurden nacheinander 1,012 g (0,007 Mol) Benzoylchlorid, 40,605 g (0,200 Mol) Terephthalsäuredichlorid (frisch destilliert, Kp 266 °C) und 74,603 g (0,204 Mol) Diphenoxybenzophenon gegeben. Die zum Einwiegen und Dosieren der Einsatzstoffe verwendeten Gefäße und Pulvertrichter wurden mit 20 ml trockenem Methylenchlorid nachgespült.

Die Temperatur wurde innerhalb von 20 Minuten auf 25°C erhöht und die erstarrende Reaktionsmasse 4 Stunden bei dieser Temperatur gehalten. Dann wurde die gummiartige Masse aus dem Kolben entfernt, durch Zerschneiden mit einem Messer vorzerkleinert und in einem Haushaltsmixer mit 2 Liter Eis-Wasser dekomplexiert und weiter zerkleinert. Die erhaltenen Polymerflocken wurden 5 mal 30 Minuten mit 5 Liter kochendem Wasser extrahiert und im Vakuum bei 150°C getrocknet.

Das erhaltene Polymer hatte die Struktur 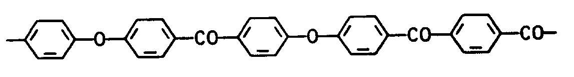
und wies eine inhärente Viskosität von 1,121 auf (gemessen in konz. Schwefelsäure, 0,5 g/100 ml bei 25°C).

### Beispiel 2 (Vergleich)

Beispiel 1 wurde reproduziert. Es wurde jedoch kein frisch destilliertes Terephthalsäuredichlorid, sondern Terephthalsäuredichlorid der Fa. DuPont verwendet, das ca. 9 Monate in einem luftdicht verschlossenen Foliensack gelagert wurde.

Es wurde ein Polymer mit einer inhärenten Viskosität von 0,837 erhalten.

### Beispiel 3

Beispiel 2 wurde wiederholt, jedoch wurden nach Zugabe von Dimethylsulfon und vor der Zugabe von Benzoylchlorid 1,533 g (0,010 Mol) Phosphoroxychlorid zugesetzt.

Es wurde ein Polymer mit einer inhärenten Viskosität von 1,115 erhalten.

### Beispiel 4

Beispiel 3 wurde wiederholt, jedoch wurden anstelle des Phosphoroxychlorids 2,082 g (0,010 Mol) Phosphorpentachlorid zugesetzt.

Es wurde ein Polymer mit einer inhärenten Viskosität von 1,119 erhalten.

### Beispiel 5 (Vergleich)

### (Stöchiometrisches Verhältnis der Monomeren, kein Endgruppenverschluß)

Unter den in Beispiel 1 beschriebenen Reaktionsbedingungen wurden umgesetzt:
Aluminiumchlorid (144,007 g, 1,080 Mol)
Dimethylsulfon (28,239 g, 0,300 Mol)
Terephthaloylchlorid (40,605 g, 0,200 Mol)
Diphenoxybenzophenon (73,283 g, 0,200 Mol)
Das verwendete Terephthaloylchlorid war dasselbe wie in Beispiel 2.

Es wurde ein Polymer mit einer inhärenten Viskosität von 1,073 erhalten.

### Beispiel 6

Beispiel 5 wurde wiederholt, jedoch wurden nach der Zugabe von Dimethylsulfon und vor der Zugabe von Terephthaloylchlorid 1,533 g (0,01 Mol) Phosphoroxychlorid zugegeben.

Es wurde ein Polymer mit einer inhärenten Viskosität von 2,667 erhalten.

### Beispiel 7

In einem mit Rührer und Stickstoff-Einleitung versehenen 500 ml-Dreihalskolben wurden 200 ml getrocknetes 1,2-Dichlorethan vorgelegt, auf -20°C gekühlt und 160,008 g (1,200 Mol) Aluminiumchlorid suspendiert. Dazu wurden bei -20°C 25,434 g (0,600 Mol) Lithiumchlorid undn 1,533 g (0,01 Mol) Phosphoroxychlorid gegeben. Bei -20°C wurden 89,467 g (0,400 Mol) p-Phenoxybenzoylchlorid zugetropft. Es wurde mit 20 ml 1,2-Dichlorethan nachgespült und die Temperatur wurde innerhalb einer Stunde langsam auf 0°C erhöht. Dann wurde der Rührer abgeschaltet und das Reaktionsgemisch bei 0°C 24 Stunden nachkondensiert. Die gummiartige Masse wurde mechanisch aus dem Kolben entfernt, durch Zerschneiden mit einem Messer vorzerkleinert und in einem Haushaltsmixer mit 2 Litern destilliertem Wasser dekomplexiert und weiter zerkleinert. Das so erhaltene Rohpolymer wurde 5 mal 30 Minuten mit 5 Liter kochendem Wasser extrahiert und im Vakuum bei 150°C getrocknet.

Das so hergestellte Polymer hatte die Struktur 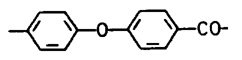
und wies eine inhärente Viskosität von 3,674 auf.

Die in den Beispielen 3, 4, 6 und 7 erhaltenen Produkte wiesen eine gute Schmelzestabilität bei der Verarbeitung auf, die den Produkten der Beispiele 1, 2 und 5 überlegen war.

## Patentansprüche

1. Verfahren zur Herstellung von Polyaryletherketonen durch elektrophile Polykondensation unter Verwendung von Carbonsäurehalogeniden als Monomerbestandteil in Gegenwart eines molaren Überschußes, bezogen auf die eingesetzte molare Menge an Carbonsäurehalogenide einer Lewis-Säure, ausgewählt aus der Gruppe AlCl₃, AlBr₃, SbCl₅, SbF₅, InCl₃, GaCl₃, BCl₃, BF₃, ZnCl₂, FeCl₃, SnCl₄, TiCl₄, und MoCl₅, und gegebenenfalls einer Lewis-Base, die nicht acylierend, alkylierend oder arylierend wirkt und selbst nicht acyliert wird, in einem inerten Lösungsmittel, dadurch gekennzeichnet, daß man der Reaktionsmischung 0,1 bis 10 mol%, bezogen auf die eingesetzte Menge an Carbonsäurehalogeniden, an Halogenverbindungen des Phosphors oder Schwefels, ausgewählt aus der Gruppe PCl₃, POCl₃, PCl₅ und SOCl₂, zusetzt.

2. Verfahren nach Anspruch 1, dadurch gekennzeichnet, daß man die Halogenverbindungen des Phosphors oder Schwefels, vor oder zusammen mit den Carbonsäurehalogeniden zugibt.

3. Verfahren nach mindestens einem der Ansprüche 1 und 2, dadurch gekennzeichnet, daß man als molaren Überschuß an Lewis-Säure 2 bis 80 mol%, bezogen auf die an der Polykondensationsreaktion teilnehmenden Carbonylgruppen verwendet.

4. Verfahren nach mindestens einem der Ansprüche 1 bis 3, dadurch gekennzeichnet, daß man die Polykondensation in Gegenwart einer Lewis-Base durchführt.

5. Verfahren nach mindestens einem der Ansprüche 1 bis 4, dadurch gekennzeichnet, daß man 0,01 bis 4 mol an Lewis-Base, bezogen auf die molare Menge an Säurehalogenidgruppen, verwendet.

6. Verfahren nach einem der Ansprüche 1 bis 5, dadurch gekennzeichnet, daß man als Lewis-Säure Aluminiumtrichlorid verwendet.

7. Verfahren nach einem der Ansprüche 1 bis 6, dadurch gekennzeichnet, daß man als Halogenverbindung Phosphoroxytrichlorid verwendet.

## Claims

1. A process for preparing polyaryl ether ketones by electrophilic polycondensation using carbonyl halides as monomer constituent in the presence of a molar excess, based on the molar amount of carbonyl halides used, of a Lewis acid selected from the group consisting of AlCl₃, AlBr₃, SbCl₅, SbF₅, InCl₃, GaCl₃, BCl₃, BF₃, ZnCl₂, FeCl₃, SnCl₄, TiCl₄ and MoCl₅ and in the presence or absence of a Lewis base which does not act acylatingly, alkylatingly or arylatingly and is itself not acylated, in an inert solvent, characterized in that the reaction mixture has added to it from 0.1 to 10 mol%, based on the amount of carbonyl halides used, of halogen compounds of phosphorus or of sulfur selected from the group consisting of PCl₃, POCl₃, PCl₅ and SOCl₂.

2. A process as claimed in claim 1, characterized in that the halogen compounds of phosphorus or sulfur are added before or together with the carbonyl halides.

3. A process as claimed in at least one of claims 1 or 2, characterized in that the molar excess of Lewis acid used ranges from 2 to 80 mol%, based on the carbonyl groups participating in the polycondensation reaction.

4. A process as claimed in at least one of claims 1 to 3, characterized in that the polycondensation is carried out in the presence of a Lewis base.

5. A process as claimed in at least one of claims 1 to 4, characterized in that from 0.01 to 4 mol of Lewis base, based on the molar amount of acid halide groups, is used.

6. A process as claimed in any one of claims 1 to 5, characterized in that the Lewis acid used is aluminum chloride.

7. A process as claimed in any one of claims 1 to 6, characterized in that the halogen compound used is phosphoryl trichloride.

## Revendications

1. Procédé de préparation de polyaryléthercétones par polycondensation électrophile avec utilisation d'halogénures d'acides carboxyliques comme composant monomère, en présence d'un excès molaire, par rapport à la quantité molaire utilisée d'halogénures d'acides carboxyliques, d'un acide de Lewis choisi dans le groupe constitué par AlCl₃, AlBr₃, SbCl₅, SbF₅, InCl₃, GaCl₃, BCl₃, BF₃, ZnCl₂, FeCl₃, SnCl₄, TiCl₄ et MoCl₅, et éventuellement d'une base de Lewis qui n'a pas d'effet acylant, alkylant ou arylant et qui n'est pas acylée elle-même, dans un solvant inerte, caractérisé en ce qu'on ajoute, au mélange réactionnel, de 0,1 à 10% en moles, par rapport à la quantité utilisée d'halogénures d'acides carboxyliques, de composés halogénés du phosphore ou du soufre, choisis dans le groupe constitué par PCl₃, POCl₃, PCl₅ et SOCl₂.

2. Procédé selon la revendication 1, caractérisé en ce qu'on ajoute les composés halogénés du phosphore ou du soufre avant les halogénures d'acides carboxyliques ou en même temps que ceux-ci.

3. Procède selon la revendication 1 ou 2, caractérise en ce qu'on utilise, comme excès molaire d'acide de Lewis, 2 à 80% en moles par rapport aux groupements carbonyle prenant part à la réaction de polycondensation.

4. Procédé selon l'une quelconque des revendications 1 à 3, caractérisé en ce qu'on conduit la polycondensation en présence d'une base de Lewis.

5. Procédé selon l'une quelconque des revendications 1 à 4, caractérisé en ce qu'on utilise de 0,01 à 4 moles de base de Lewis par rapport à la quantité molaire de groupements halogénure d'acide.

6. Procédé selon l'une quelconque des revendications 1 à 5, caractérisé en ce qu'on utilise du trichlorure d'aluminium comme acide de Lewis.

7. Procédé selon l'une quelconque des revendications 1 à 6, caractérise en ce qu'on utilise de l'oxytrichlorure de phosphore comme composé halogéné.
